# EUROPEAN PATENT APPLICATION

(11) **EP 1 252 945 A2**
(43) Date of publication of application: **30.10.2002**
(21) Application number: 02076372.8
(22) Date of filing: 08.04.2002
(51) Int. Cl.: B21J 17/02

(54) **Single-chamber self-locking cylinder**

(30) Priority: 26.04.2001 IT MI20010872
(71) Applicant: SALVAGNINI ITALIA S.p.A., I-36040 Sarego (Vicenza) (IT)
(72) Inventor: Sorze, Fabio, 45026 Lendinara (Rovigo) (IT)
(74) Representative: Mittler, Enrico

(57) **Abstract**

A single-chamber self-locking cylinder is described in which the single-chamber (1, 2) is made up of a male half-cylinder (1) and a female half-cylinder (2) that are inserted one into the other in mutually sliding way in axial direction. Two pairs of diametral rods (8, 10; 13, 16) that are angularly offset from each other are provided that operate on said half-cylinders (1, 2) in order to retain them in a predetermined axially centred position under the action of a fluid in pressure that is fed inside said single-chamber (1,2). Each one of said pairs of diametral rods (8, 10; 13, 16) is made up of two rods (8,10; 13, 16) operating onto opposite faces of said half-cylinders (1, 2) and coupled to each other by axial tie rods (9, 14). One (8, 13) of the two rods (8, 10; 13, 16) is fastened to a stem (3, 5) coupled in axially sliding way to one of the two half-cylinders (1, 2) while the other one (10, 16) is slidingly coupled to another stem (5, 3) that is coupled in axially sliding way to the other one of the two half-cylinders (1, 2).

## Description

The present invention concerns a single-chamber self-locking cylinder that is particularly but not exclusively destined to the use in anthropomorphous robots for sheet metal machining machines.

By the term "anthropomorphous robot" a robot for industrial machines is meant that has the ability to execute all the movements of a human arm, and in particular the ones of the elbow and wrist articulations.

Anthropomorphous robots are increasingly utilised in the industry in order to substitute the human intervention on machines of various kind, in particular sheet metal machining machines as for instance bending machines.

In robots utilised in this way it was found necessary to interpose an elastic joint that is lockable on command between the wrist and the handling organ or hand of the robot, allowing the robot to accompany gently and with flexibility the movement of the sheet metal during the bending stage, while at the same time maintaining the precision of movement during the stage of loading and unloading of the sheet metal.

An example of elastic joint for anthropomorphous robot is described in the Italian patent application n. MI2001A000262 dated 9 February 2001 and it provides for the presence of self-locking pneumatic or hydraulic cylinders, that is cylinders that are capable to lock themselves in centred configuration, that is with their ends in intermediate position between the completely extended one and the completely retracted one, as well as to exert a force proportional to the feeding pressure onto the organs being controlled.

Scope of the present invention is to provide a new self-locking cylinder of the single-chamber type.

According to the invention such scope is attained with a single-chamber cylinder as defined in claim 1.

The characteristics of the present invention will be made evident by the following detailed description of an embodiment thereof that is illustrated as a non-limiting example in the enclosed drawings, in which:

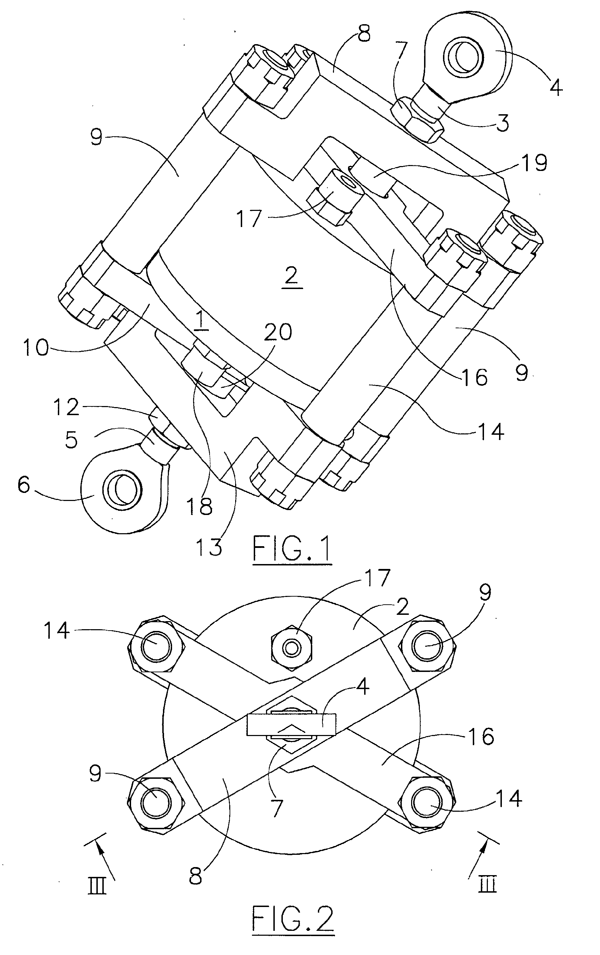

Figure 1 shows in perspective view a single-chamber self-locking cylinder according to the present invention;
Figure 2 shows the same cylinder in top plan;
Figure 3 shows said cylinder in axial section according to the line III-III in Figure 2.

In the drawings a single-chamber pneumatic cylinder is shown, in which the single-chamber is made up of a male half-cylinder 1 and a female half-cylinder 2 that are inserted into each other in mutually sliding way in axial direction. Even if not specifically shown, of course the tightness between the side surfaces of the two half-cylinders is assured.

To the female half-cylinder 2 a stem 3 with spherical end joint 4 is slidingly coupled through a sliding block 11 and to the male half-cylinder 1 a stem 5 with spherical end joint 6 is slidingly coupled through a sliding block 15.

Between a nut 7 and a bushing 19 screwed onto the stem 3 a first diametral rod 8 is retained that rests on the external plane face of the female half-cylinder 2 and is coupled by external axial tie rods 9 to a second diametral rod 10, situated on the same diametral plane of the first one, which rests on the external plane face of the male half-cylinder 1 and can slide along the stem 5 owing to the sliding block 15.

Between a nut 12 and a bushing 20 screwed onto the stem 5 a third diametral rod 13 is in turn retained, that is arranged at approximately 30° from the rods 8 and 10, rests on the external plane face of the male half-cylinder 1 and is connected by external axial tie rods 14 to a fourth diametral rod 16, situated on the same diametral plane as the third rod 13, which rests on the external plane face of the female half-cylinder 2 and can slide along the stem 3 owing to the sliding block 11.

Two mouths 17 and 18 finally provide for the inlet and the discharge of air (or other fluid) inside the cylinder.

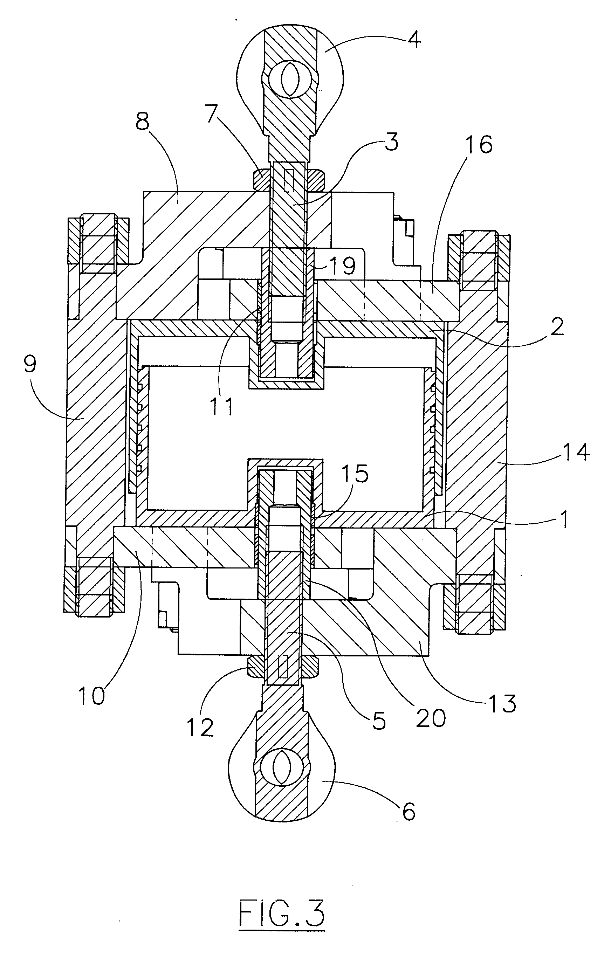

If the cylinder is fed with air (or other fluid) at high pressure, the two pairs of diametral rods 8, 10 and 13, 16 become lined up and locked to each other in axial sense and consequently the two half-cylinders 1 and 2 get arranged and locked in the position of Figure 3. The cylinder is thus said to be locked in centred configuration.

If instead the cylinder is fed with air (or other fluid) at low pressure, the two pair of diametral rods 8, 10 and 13, 16 still get lined up, but not locked, in axial sense and the two half-cylinders consequently tend to bring themselves in centred configuration with a force proportional to the feeding pressure, though leaving the possibility to move into a more pressed position under the action of an external force directed in such sense.

This is what is necessary for applications as anthropomorphous robots, in particular for sheet metal machining machines.

## Claims

1. Single-chamber cylinder self-locking in centred position, **characterised in that**:
- said single-chamber (1, 2) is made up of a male half-cylinder (1) and a female half-cylinder (2) axially sliding as regards one another;
- two pairs of diametral rods (8, 10; 13, 16) angularly offset from each other are associated with said half-cylinders (1, 2) in order to keep them axially in centred position when a fluid in pressure is fed inside said single-chamber (1, 2);
- each one of said pairs of diametral rods (8, 10; 13, 16) is made up of two rods (8, 10; 13, 16) operating on opposite faces of said half-cylinders (1, 2) and coupled to each other by axial tie rods (9, 14);
- one (8, 13) of the rods of each pair (8, 10; 13, 16) is fastened to a stem (3, 5) coupled in axially sliding way to one of the two half-cylinders (1, 2) whereas the other rod (10, 16) of the same pair is slidingly coupled to another stem (5, 3) that is in turn slidingly coupled to the other one of the two half-cylinders (1, 2).

2. Single-chamber cylinder according to claim 1, **characterised in that** said pairs of rods (8, 10; 13, 16) are angularly offset with respect to one another.

3. Single-chamber cylinder according to any one of the previous claims, **characterised in that** the fastening of the rods (8, 13) of each pair to said stems (3, 5) is obtained by means of nuts (7, 12) and bushings (19, 20), where the bushings (20, 19) serve as a guide for the axial sliding of the other rods (10, 16) of the same pair and of the two half-cylinders (1, 2) as regards said stems (5, 3).

4. Single-chamber cylinder according to any one of the previous claims, **characterised in that** said stems (3, 5) are provided with respective spherical end joints (4, 6).
